# EUROPÄISCHE PATENTSCHRIFT

(11) **EP 0 927 501 B1**
(45) Veröffentlichungstag und Bekanntmachung des Hinweises auf die Patenterteilung: **18.05.2005**
(21) Anmeldenummer: 97943781.1
(22) Anmeldetag: 18.09.1997
(51) Int. Cl.: H04Q 7/38, H04Q 7/22, H04L 29/06

(54) **VERFAHREN UND EINRICHTUNG ZUR ANONYMISIERUNG VON TELEKOMMUNIKATIONSVORGÄNGEN UND -BEZIEHUNGEN BEI TELEMATIKANWENDUNGEN**
METHOD AND APPARATUS FOR RENDERING TELECOMMUNICATION OPERATIONS AND RELATIONS ANONYMOUS IN TELEMATIC APPLICATIONS
PROCEDE ET DISPOSITIF PERMETTANT DE RENDRE DES OPERATIONS ET DES RELATIONS ANONYMES DANS LE CADRE DES TELECOMMUNICATIONS, POUR DES APPLICATIONS TELEMATIQUES

(30) Priorität: 18.09.1996 DE 19638072
(43) Veröffentlichungstag der Anmeldung: 07.07.1999
(73) Patentinhaber: T-Mobile Deutschland GmbH, 53227 Bonn (DE)
(72) Erfinder: CAESAR, Claudius, D-64289 Darmstadt (DE); MÄTHNER, Nils, D-53125 Bonn (DE)
(74) Vertreter: Riebling, Peter, Dr.-Ing.
(86) Internationale Anmeldenummer: PCT/DE1997/002096
(87) Internationale Veröffentlichungsnummer: WO 1998/012890

(56) Entgegenhaltungen:
- DE-A- 19 545 248
- US-A- 5 058 152
- US-A- 5 590 184
- SAMFAT D ET AL: "UNTRACEABILITY IN MOBILE NETWORKS" MOBICOM. PROCEEDINGS OF THE ANNUAL INTERNATIONAL CONFERENCE ON MOBILE COMPUTING AND NETWORKING, 13.November 1995, Seiten 26-36, XP000197826

## Beschreibung

Telematikanwendungen (z.B. Mautverfahren und Verfahren zur Ermittlung von dynamischen Verkehrsinformationen) können zur Erbringung der gewünschten Dienstleistung die Übertragung von Angaben zum Aufenthaltsort des Dienstenutzers/Kunden zu einer bestimmten Zeit an den Betreiber des Telematiksystems erforderlich machen. Erhält der Betreiber dann zusätzlich Informationen zur Identität des Nutzers, so wird er in die Lage versetzt, detaillierte Bewegungsprofile zu erstellen, was für die Akzeptanz des Gesamtproduktes nicht wünschenswert und in bestimmten Fällen auch datenschutzrechtlich bedenklich ist. Einige Telekommunikationsanordnungen liefern heute gerade diese identifizierenden Merkmale; ein typisches Beispiel ist die systemimmanente Bereitstellung der Absenderrufnummer bei Nachrichtenübertragung mit Short Message Service (SMS) in GSM-Mobilfunknetzen.

Die CA-A-2 167 875, die mit der US-A-5 590 184 korrespondiert, offenbart ein Verfahren zur Anonymisierung von Telekommunikationsvorgängen, bei dem eine zwischen zwei Teilnehmern befindliche Einrichtung alle einen Teilnehmer identifizierenden Merkmale aus dem Kommunikationsvorgang entfernt, durch eine eindeutig außerhalb der Einrichtung unbekannte temporäre Identifikation ersetzt und für eine begrenzte Zeit die Abbildung der permanenten auf die temporäre Identifikation gewährleistet.

Aufgabe der beschriebenen Erfindung ist die Entfernung derden Endkunden identifizierenden Merkmale aus dem Kommunikationsvorgang, bevor diese den Betreiber des Telematiksystems erreichen, und das auch bei Nutzung von kryptographischen Verfahren.

Die Aufgabe wird durch die in den unabhängigen Ansprüchen angegebenen Merkmale gelöst.

Vorteil des erfindungsgemäßen Verfahrens ist, daß sowohl die Anforderungen des Datenschutzes erfüllt sind, als auch die Verträglichkeit mit vorhandenen Telekommunikationsnetzen gegeben ist.

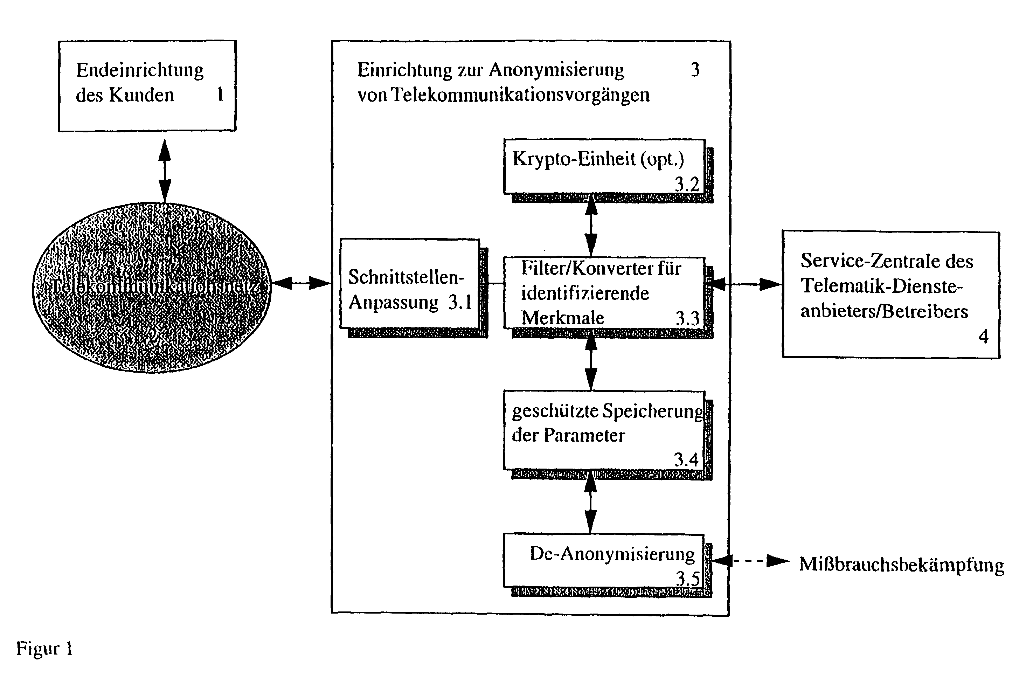

Ein Beispiel für die Erfindungsidee wird im folgenden anhand der Fig. 1 erläutert. Das in Fig. 1 dargestellte Verfahren garantiert, daß der Betreiber des Telematiksystems nicht in den Besitz von Informationen zur Identität des Absenders von Daten kommen kann, indem im Falle SMS als einer möglichen Ausprägung eines Telekommunikationsnetzes (2) die Absenderrufnummer durch eine temporäre Identität ersetzt wird. Die Abbildung von permanenter Identität auf temporäre Identität bei Nachrichten von der kundenseitigen Endeinrichtung (1) zur Servicezentrale (4) sowie von temporärer Identität auf permanente Identität bei Nachrichten von der Zentrale (4) zum Kunden (1) wird für eine vorgegebene, begrenzte Zeit sichergestellt (3.3), wobei die Abbildung innerhalb der Einrichtung (3) vor unbefugtem Zugriff geschützt gespeichert wird (3.4). Die temporäre Identität wird von der Einrichtung automatisch vergeben und bei lang andauernden Kommunikationsbeziehungen ggf. gewechselt.

Grundsätzlich besteht bei anonymisierten Kommunikationsvorgängen, die Gefahr, daß in Mißbrauchsfällen der Verursacher nur schwer festgestellt werden kann. Typische Mißbrauchsszenarien in Telematikanwendungen sind die Lieferung gefälschter/manipulierter Daten und die Schädigung des Dienstebetreibers durch Zustellung unerwünschter Daten über Kommunikationswege, deren Kosten nicht zu Lasten des Absenders sondern des Dienstebetreibers gehen (Reverse Charging). Um diesem Mißbrauchsrisiko zu begegnen, beinhaltet die erfindungsgemäße Lösung die Möglichkeit, auf Anforderung des Dienstebetreibers für einzelne Kommunikationsvorgänge die Anonymität aufzuheben (3.5), so daß Maßnahmen der Mißbrauchsverfolgung eingeleitet werden können.

Die beschriebene Lösung ist durch variable Schnittstellenanpassungen (3.1) unabhängig von bestimmten Kommunikationswegen und -netzen einsetzbar, d.h. neben GSM-SMS auch für den zukünftigen GSM-GPRS (General Packet Radio Service), Paketnetze nach X.25, TCP/IP sowie ISDN und andere.

## Patentansprüche

1. Verfahren zur Anonymisierung von Telekommunikationsvorgängen und -beziehungen bei Telematikanwendungen, wobei eine logisch zwischen Telekommunikationsnetz (2) und Telematik-Service-Zentrale (4) befindliche Anonymisierungseinrichtung (3) gegenüber dem Betreiber/Anbieter von Telematikdienstleistungen alle den Endteilnehmer identifizierenden Merkmale aus dem Kommunikationsvorgang entfernt, durch eine eindeutige, außerhalb der Einrichtung unbekannte und wechselnde, temporäre Identifikation ersetzt und für eine begrenzte Zeit die Abbildung der permanenten Identifikation auf die temporäre Identifikation gewährleistet,
**dadurch gekennzeichnet,**
**daß** bei Nutzung von kryptographischen Verfahren zur Sicherung der Vertraulichkeit und Manipulationssicherheit von Kommunikationsvorgängen, sofern diese teilnehmerindividuelle Parameter verwenden , die logisch zwischen Telekommunikationsnetz und Telematik-Service-Zentrale angeordnete Anonymisierungseinrichtung (3) kryptographische Transformationen (3.2) zur Separation von bei den kryptographischen Verfahren verwendeten Schlüsselkreisen vornimmt.

2. Verfahren nach Anspruch 1, **dadurch gekennzeichnet, daß** bei der bidirektionalen Kommunikation zusätzlich eine Abbildung der temporären Identifikation auf die permanente Identifikation erfolgt.

3. Verfahren nach einem der Ansprüche 1 oder 2, **dadurch gekennzeichnet, daß** bei Mißbrauch zu Lasten des Betreibers Anbieters von Telematikdiensten die temporäre Identifikation aufgehoben, und innerhalb eines festgelegten Zeitintervalls die permanente Identifikation des Endteilnehmers auf Verlangen des Betreibers Anbieters von Telematikdiensten preisgegeben wird.

4. Einrichtung zur Durchführung des Verfahrens nach einem der Ansprüche 1 bis 3, die aus folgenden Komponenten besteht:
- Einrichtung (3.1) zur Schnittstellenanpassung an Telekommunikationsdienst(e)/-netz(e),
- Einrichtung zur Filterung/Konvertierung (3.3) identifizierender Merkmale,
- Einrichtung (3.4) zur geschützten Speicherung der Abbildungen zwischen personenbeziehbaren und anonymen Parametern,
**gekennzeichnet durch** eine:
- Einrichtung (3.5) zur kontrollierten Aufhebung der Anonymität in Einzelfällen, und eine
- Einrichtung (3.2) für kryptographische Transformationen zur Separation von bei den kryptographischen Verfahren verwendeten Schlüsselkreisen, wobei diese Einrichtung derart ausgestaltet ist, daß insgesamt alle relevanten Kommunikationsvorgänge zwischen Telematikdienstezentrale (4) und Endeinrichtung (1) des Kunden an der logischen Schnittstelle zwischen Telematikdienstezentrale (4) und Telekommunikationsnetz (2) kontrolliert.

5. Netzelement für ein Telekommunikationssystem, **dadurch gekennzeichnet, dass** es eine Einrichtung nach Anspruch 4 aufweist.

## Claims

1. Method for the anonymisation of telecommunications operations and relations in telematics applications, wherein an anonymising device (3) logically located between telecommunications network (2) and telematics service centre (4) removes all characteristics identifying the end subscriber from the communications operation in relation to the operator/provider of telematics services, replaces them by a unique, varying, temporary identification unknown outside the device, and for a limited time ensures projection of the permanent identification onto the temporary identification, **characterised in that**, when using cryptographic methods to ensure confidentiality and security of communications operations against manipulation, if the latter use parameters individual to the subscriber, the anonymising device (3) logically located between telecommunications network and telematics service centre performs cryptographic transformations (3.2) for the separation of code circuits used in the cryptographic methods.

2. Method according to claim 1, **characterised in that**, in bidirectional communication, projection of the temporary identification onto the permanent identification is effected in addition.

3. Method according to one of claims 1 or 2, **characterised in that** in case of misuse at the expense of the operator/provider of telematics services the temporary identification is cancelled, and within a fixed interval of time the permanent identification of the end subscriber is abandoned at the request of the operator/provider of telematics services.

4. Device for carrying out the method according to one of claims 1 to 3, which consists of the following components:
- device (3.1) for interface adaptation to telecommunications service(s)/network(s),
- device for the filtering/conversion (3.3) of identifying characteristics,
- device (3.4) for the protected storage of the projections between person-relatable and anonymous parameters,
**characterised by** a:
- device (3.5) for the controlled cancellation of anonymity in individual cases, and a
- device (3.2) for cryptographic transformations for the separation of code circuits used in the cryptographic methods, wherein this device is designed so as to control altogether all relevant communications operations between telematics service centre (4) and terminal device (1) of the customer at the logical interface between telematics service centre (4) and telecommunications network (2).

5. Network element for a telecommunications system, **characterised in that** it has a device according to claim 4.

## Revendications

1. Procédé pour rendre anonymes des opérations et relations de télécommunications dans des applications télématiques, selon lequel un dispositif d'anonymisation (3) situé d'un point de vue logique entre le réseau de télécommunications (2) et le central de service télématique (4) supprime de l'opération de communication, vis-à-vis de l'exploitant/du fournisseur de services télématiques, toutes les caractéristiques identifiant l'abonné final, les remplace par une identification temporaire univoque qui est inconnue en dehors du dispositif et qui change, et garantit pendant une durée limitée l'application de l'identification permanente sur l'identification temporaire,
**caractérisé en ce que** lorsqu'on utilise des procédés cryptographiques pour garantir la confidentialité et une protection contre les manipulations d'opérations de communication, dans la mesure où celles-ci utilisent des paramètres individuels pour les abonnés, le dispositif d'anonymisation (3) disposé d'un point de vue logique entre le réseau de télécommunications et le central de service télématique procède à des transformations cryptographiques (3.2) pour séparer des circuits clés utilisés avec les procédés cryptographiques.

2. Procédé selon la revendication 1, **caractérisé en ce que** dans le cas de la communication bidirectionnelle, il y a en plus une application de l'identification temporaire sur l'identification permanente.

3. Procédé selon la revendication 1 ou 2, **caractérisé en ce que** dans le cas d'un usage abusif à la charge de l'exploitant/du fournisseur des services télématiques, l'identification temporaire est annulée, et dans un laps de temps déterminé l'identification permanente de l'abonné terminal est abandonnée à la demande de l'exploitant/du fournisseur des services télématiques.

4. Dispositif pour mettre en oeuvre le procédé selon l'une des revendications 1 à 3, qui se compose des éléments suivants :
- dispositif (3.1) pour l'adaptation d'interface à un ou des services/réseaux de télécommunications,
- dispositif pour filtrer/convertir (3.3) les caractéristiques d'identification,
- dispositif (3.4) pour la mémorisation protégée des applications entre les paramètres aptes à être ramenés à des personnes et les paramètres anonymes,
**caractérisé par** :
- un dispositif (3.5) pour l'annulation contrôlée de l'anonymat dans des cas individuels, et
- un dispositif (3.2) pour les transformations cryptographiques pour séparer les circuits clés utilisés avec les procédés cryptographiques, ce dispositif étant conçu pour contrôler dans l'ensemble toutes les opérations de communication significatives entre le central de service télématique (4) et le dispositif terminal (1) du client au niveau de l'interface logique entre le centre de service télématique (4) et le réseau de télécommunications (2).

5. Elément de réseau pour un système de télécommunications, **caractérisé en ce qu'**il comporte un dispositif selon la revendication 4.
